# EUROPÄISCHE PATENTANMELDUNG

(11) **EP 3 335 841 A2**
(43) Veröffentlichungstag der Anmeldung: **20.06.2018**
(21) Anmeldenummer: 17198667.2
(22) Anmeldetag: 26.10.2017
(51) Int. Cl.: B25J 9/00, B60L 13/00, B65G 54/02

(54) **MANIPULATOR-SYSTEM FÜR MONTAGESYSTEME**

(30) Priorität: 26.10.2016 DE 102016120464
(71) Anmelder: WIKA Schweiz AG, 6285 Hitzkirch (CH)
(72) Erfinder: Burri, Silvan, 6280 Hochdorf (CH); Barmettler, Peter, 6331 Hünenberg (CH); Kolb, Andreas, 6284 Sulz (CH); Suppiger, Björn, 6285 Hitzkirch (CH); Ming, Sascha, 6032 Emmen (CH)
(74) Vertreter: Katscher Habermann Patentanwälte

(57) **Zusammenfassung**

Die Erfindung bezieht sich auf ein modulartiges Manipulatorsystem, wobei im Durchlauf durch eine Montagestraße ein Werkstück mittels eines Werkstückträgers (2) an verschiedenen Manipulatoren (3,6) vorbeiführt wird, welche dann Fertigungsschritte an dem Werkstück ausführen, welches auf dem neuartigen Werkstückträger abgelegt und/ oder von Station zu Station transportiert wird.

## Beschreibung

### TECHNISCHES GEBIET

Die Erfindung bezieht sich auf ein modulartiges Manipulatorsystem, wobei im Durchlauf durch eine Montagestraße ein Werkstück mittels eines Werkstückträgers an verschiedenen Manipulatoren vorbeiführt wird, welche dann Fertigungsschritte an einem Werkstück ausführen, welches auf dem neuartigen Werkstückträger transportiert oder dort abgelegt wird und von Station zu Station transportiert wird.

### AUFGABE DER ERFINDUNG

Es ist die Aufgabe der Erfindung, eine kostengünstige Lösung für ein modulartiges Manipulatorsystem, welches im Durchlauf ein Werkstück mittels eines Werkstückträgers an verschiedenen Manipulatoren vorbeiführt, zu schaffen. Darüber hinaus soll ein Aufbau geschaffen werden, welcher eine hohe Flexibilität ermöglicht und welcher Montagen ermöglicht, bei denen das Werkstück so geführt wird, dass die Einflüsse von Führung und Federung auf Prozessparameter minimiert sind. Gleichzeitig soll die Gesamtanordnung sehr montagefreundlich sein und schnelle Umbauten, Anpassungen ermöglichen.

Diese Aufgaben werden mit einem System gelöst, wie in den unabhängigen Ansprüchen beschrieben ist.

### ZUSAMMENFASSUNG DER ERFINDUNG

Erfindungsgemäß weist die Erfindung hierzu als Umgebung vorzugsweise ein Montagesystem auf, welches aus einer oder mehreren modulartige Montagezellen besteht, welche Manipulatoren aufnehmen und als Montage-Einheiten um eine zentrale, modulartige Insel angekoppelt sind, in welcher ein modulartiges Werkstückträgerbeförderungssystem integriert ist.

Insbesondere weisen die angekoppelten Montagemodule jeweils Montagemanipulationseinheiten auf, denen jeweils eine Steuerungseinheit zugeordnet ist, welche direkt unter der jeweiligen Montagemanipulationseinheit untergebracht ist.

Vorzugsweise ist diese Steuerungseinheit ausziehbar integriert und hat dieselbe Breite wie die Montagemanipulationseinheit oder eine Grundplatte der Montagemanipulationseinheit.

Jeder Steuerungseinheit ist ein Lichtfeld am Montagemodul zugeordnet, welches einen Zustand der Steuereinheit signalisiert.

Jedes Montagemodul hat eine obere Tür, welche Zugang zu den Montagemanipulationseinheiten ermöglicht, und eine untere Tür, welche die Steuerungseinheiten abdeckt, und ein zentrales Panel, welches Tasten oder Schalter und einen Bildschirm enthält.

Der Bildschirm ermöglicht Zugriff auf einen Zentralrechner, oder die jeweiligen Steuerungseinheiten des Montagemoduls. Hierbei ist das Menu zwischen den verschiedenen Rechnern mit HTML 5 verknüpft.

Der Bildschirm ist vorzugsweise mit berührungsempfindlicher Bedienung ausgestattet.

Über entsprechende Anbindung kann die Anlage aber auch insbesondere per Datenfernübertragung gesteuert und bedient werden. Prozessdaten werden insbesondere cloudbasierend auf externen Datenservern mit VPN oder Internetanbindung verwaltet.

Das gesamte System kann als lineare Montageanlage, bei dem die Werkstückträger hin und her fahren, oder als Umlaufsystem konzipiert sein.

Insbesondere ist das Magnetträgersystem gleich einer Magnetbahn aus Förderelementen gebildet, welche Magnetspulen als Antrieb enthalten, und wobei der Werkstückträger mit einem oder zwei Permanentmagneten ausgerüstet ist, welche zur Positionierung des Werkstückträgers durch die jeweiligen angesteuerten Spulen dienen, und welche aber auch gleichzeitig die vertikale Führung auf übereinanderliegenden Schienen, die als Bestandteil der Förderelemente ausgeführt sind, gewährleistet.

Der Werkstückträger ist erfindungsgemäß mit einer gefederten Grundplatte ausgeführt, wobei eine Spiral- oder Tellerfeder, vorzugsweise eine Magnetfeder zum Einsatz kommt. Die Magnetfeder zeichnet sich hierbei insbesondere durch eine konstante Kraft über einen wesentlichen, zentralen Abschnitt des Federwegs aus.

Beim Anfahren des Werkstückträgers an eine Montageeinheit kann so mittels der Platte das Werkstück gefedert an eine Arbeitsstation herangeführt werden.

Insbesondere sind die Manipulationseinheiten, Montagestationen mit Servoantrieben ausgerüstet, welche Greifer oder Montageköpfe in drei Raumachsen und die Drehachse fahren können. Vorzugsweise haben hier eine oder zwei Achsen einen doppelten Auszug und können dadurch besonders kompakt gebaut sein. Durch Überwachung des Ansteuerungsstroms der Manipulatoren kann eine Montagekraft oder eine Abweichung erfasst werden. Insbesondere sind oberhalb der Manipulatoren Kameras angebracht, welche eine Position eines Bauteils erfassen und diese an eine Greifereinheit übermitteln.

### KURZBESCHREIBUNG DER ZEICHNUNGEN

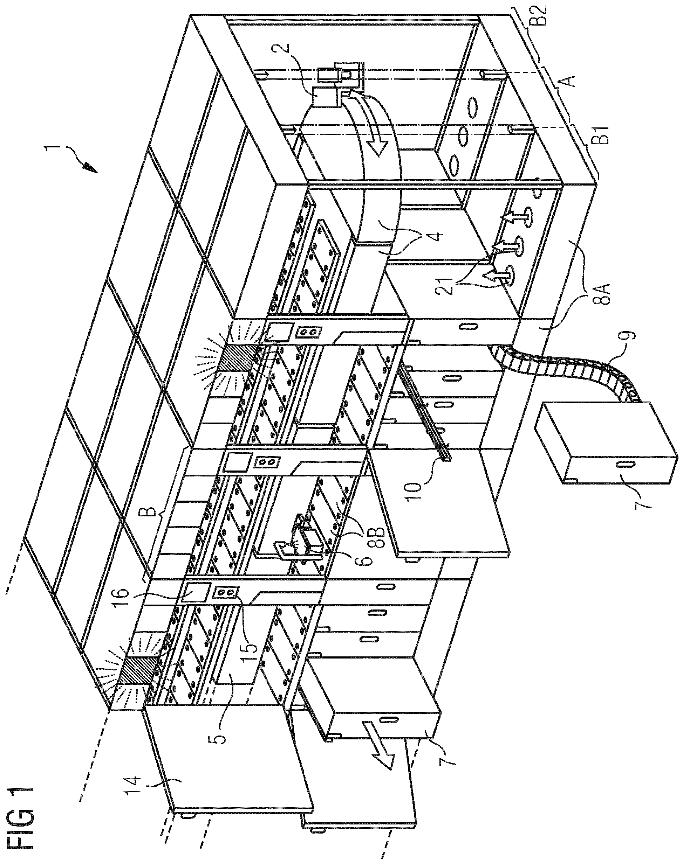

Fig. 1 zeigt das modulartiges Montageablaufsystem (1), welches im Durchlauf ein Werkstück mittels eines Werkstückträgers (2) an verschiedenen Manipulatoren (3) vorbeiführt, wobei zusammengekoppelte Zentralmodule (A) mit Fördersegmenten (4) ein zentrales Förderelement (5) bilden, welches Werkstücke mittels eines Werkstückträgers (2) fördert.

Zwei oder mehrere zusammengekoppelte Montagemodule (B) sind hierbei an die Zentralmodule (A) und somit auch an das zentrale Förderelement (5) angekoppelt, welches in den zentralen Inselmodulen (A) untergebracht ist.

Die Montagemodule (B) nehmen mehrere Manipulationseinheiten (6) in einer Reihe auf, wobei immer einer Manipulationseinheit (6) eine Steuereinheit (7) zugeordnet ist, und wobei die Steuereinheit (7) vorzugsweise unterhalb der Manipulationseinheit (6) mittels Auszug zugänglich ist, und wobei vorzugsweise die Manipulationseinheit (6) mit einem Manipulator (3) eines Zentralmoduls (A) zusammenwirkt.

Je einer Manipulationseinheit (6) ist hierbei eine Grundplatte (8B) zugeordnet, welche vorzugsweise der Breite der Steuereinheit entspricht. Diese kann jedoch auch variieren.

Je Manipulationseinheit (6) ist weiterhin vorzugsweise auch eine Grundplatte (8A) auf der anderen Seite, also innerhalb eines angeschlossenen Zentralmoduls (A), zugeordnet.

Die Montagemodule weisen einen oberen Frontal-Abschnitt (11) mit einer gesicherten Tür (14) auf, sowie ein Bedienfeld (15) und einen Bildschirm (16), wobei über den Bildschirm (16) auf den Zentralrechner des modulartigen Montageablaufsystems oder die den jeweiligen Manipulationseinheiten (7) oder Manipulatoren (3, 6) zugeordneten Steuerungsrechner zugegriffen werden kann.

In einen unteren Abschnitt (12) werden die Steuereinheiten (7) zur Ansteuerung der Manipulationseinheiten aufgenommen. Ein oberes Lichtfeld (13) enthält segmentartig Leuchten, um einen jeweiligen Zustand der zugeordneten Steuereinheit (7) oder Manipulatoreinheit (6, 3) anzeigen zu können.

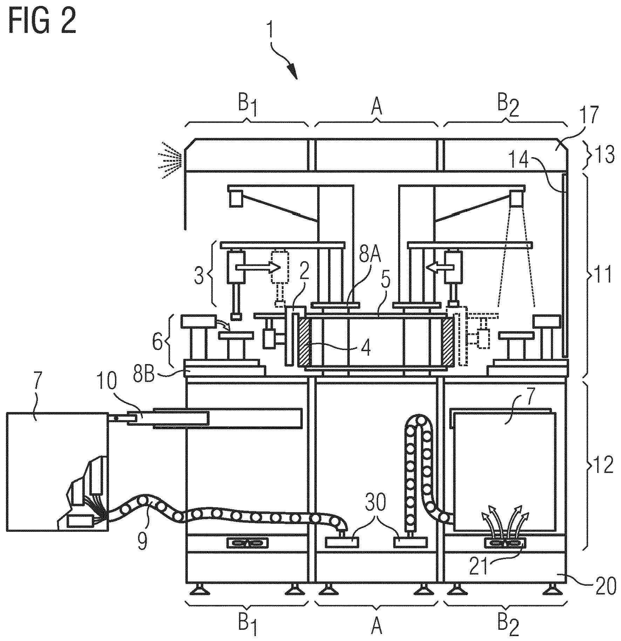

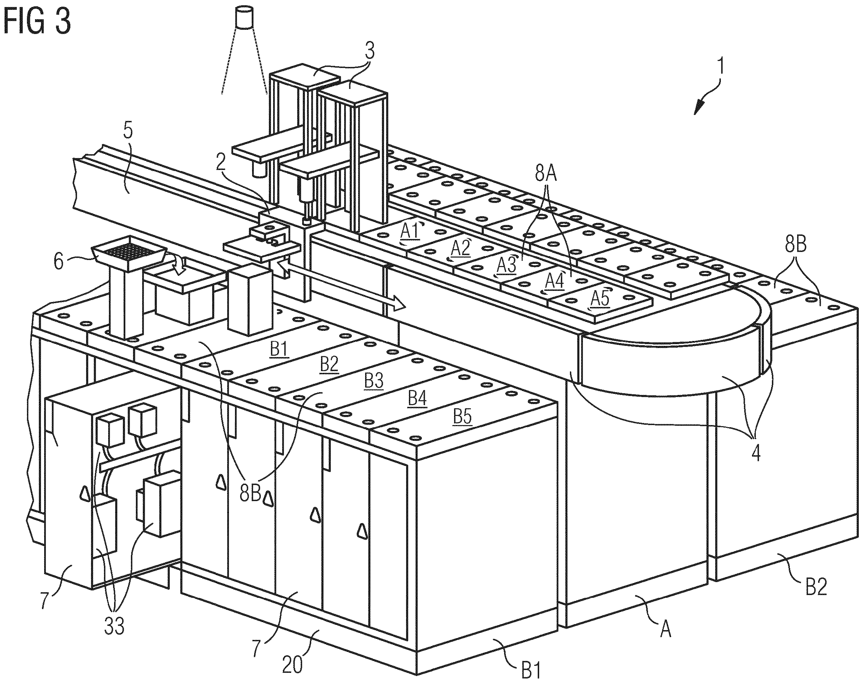

Fig. 2 und 3 zeigen ergänzend, dass die Steuereinheiten (7) unterhalb der Manipulationseinheiten (6) an ein Auszugsführungssystem (10) angekoppelt oder eingehängt sind, wobei jede Einheit mit einem Kabelführungssystem (9) mit einer zentralen Versorgungsverteilung (einem Montagemodul (B)) verbunden ist.

Eine Steuereinheit (7) nimmt vorzugsweise folgende Komponenten (33) in sich auf:
- eine Energieversorgungseinheit,
- einen Steuerungsrechner zur Ansteuerung der zugeordneten Manipulationseinheit(en),
- einen Servoverstärker und /oder einen Kameraserver und/oder eine Sicherheitseinrichtung,
und oder weitere Komponenten wie Netzwerkverteiler oder auch Druckluftventile oder Druckluftverteiler.

Das modulartige Montageablaufsystem besteht wie vorbeschrieben aus einem zentralen, modulartigen Inselmodul (A), wobei dies ein Förderelement (4, 5) enthält, welches Werkstücke mittels eines Werkstückträgers (2) fördert. Weiterhin sind hierin untergebracht mehrere Manipulator-Teilelemente (3), welche mit Manipulationseinheiten (6) auf Montagelatten (8B) in den angekoppelten Montagemodulen (B) zusammenwirken, wobei die Montagemodule (B) mehrere Manipulationseinheiten (6) auf Montageplatten (8B) in einer Reihe aufnehmen, und wobei vorzugsweise immer einer Manipulationseinheit (6) eine Steuereinheit (7) zugeordnet ist, und wobei Manipulationseinheiten (6) gegenüber den Manipulator-Teilelementen (3) des zentralen Inselmoduls (A) angeordnet sind, und wobei vorzugsweise das Förderelement (5, 4) den Werkstückträger (2) zwischen den Manipulationseinheiten (6) der Montagemodule (B) und den Manipulator-Teilelementen (3) des Inselmoduls (A) hindurchführt.

Das Inselmodul (A) kann hierbei als Insel betrachtet werden, weil die Montagemodule (B) vorzugsweise um dieses herum angeordnet sind. Es ist jedoch auch möglich, dass eine Gesamtmontageanlage aus einer Reihe (Halbinsel) mit einem linearen Fördertransportsystem mit Werkstückträgern besteht, an welches die Montagemodule (B) einseitig angekoppelt sind. Vorzugsweise werden die Montagemodule (B) aber beidseitig angekoppelt, und innerhalb des Inselmoduls (A) kommt ein Umlaufsystem für Werkstückträger (2) zum Einsatz.

Das neuartige, modulartige Montageablaufsystem erfasst insbesondere zu verarbeitende Werkstücke je Station mit einem Kamerasystem (60), welches Bestandteil eines zentralen Moduls (A), vorzugsweise auf einer Montageplatte (8A) zu einem Manipulator-Teilelement (3) mitangeordnet ist.

Bilddaten dieser Kameraeinheit erfassen insbesondere Werkstücke, welche durch eine oder mehrere Manipulationseinheiten (6) vom Montagemodul (B) bereitgestellt werden. Die Bereitstellung erfolgt insbesondere durch Rüttelförderer (90), welche Werkstücke auf eine Entnahmeplatte (61) fördert, auf welcher sie von der Kamera erfasst werden.

Eine Auswertung der Bilddaten durch Komponenten der Steuereinheit (7) erfasst Anzahl und Lage der Werkstücke. Hiernach kann dann ein Greifer (54) eines Manipulator-Teilelements (3) des zentralen Moduls (A) angesteuert werden, welcher das Werkstück von einer Entnahmeplatte (61) der Manipulationseinheit (6) des Montagemoduls (B) aufnimmt, dann zum Werkstückträger (2) ausrichtet und dann auf diesem Werkstückträger ablegt.

Vorzugsweise sind die Montagemodule (B) schrankartig aufgebaut und die Manipulationseinheiten (3, 6) sind über zugehörige Grundmontageplatten (8) auf ein Bohrungsraster, ein Raster von Montagebohrungen montiert, welches einen Abstand von Bohrung zu Bohrung von 40 mm hat. Die schrankartigen Module (B) haben hierbei immer eine Gesamtbreite von vorzugsweise 100 cm oder 80 cm.

Die Steuereinheiten (7) beziehen ihre Kühlluft von unten aus dem Modulboden und werden aktiv über Lüfter (21) belüftet. Insbesondere dadurch, dass die Steuereinheiten (7) die genannten Komponenten dreidimensional in mehreren Ebenen aufnehmen, ist hierbei die Ausführung der Erfindung besonders platzsparend aber auch für die Führung der Kühlluft optimiert.

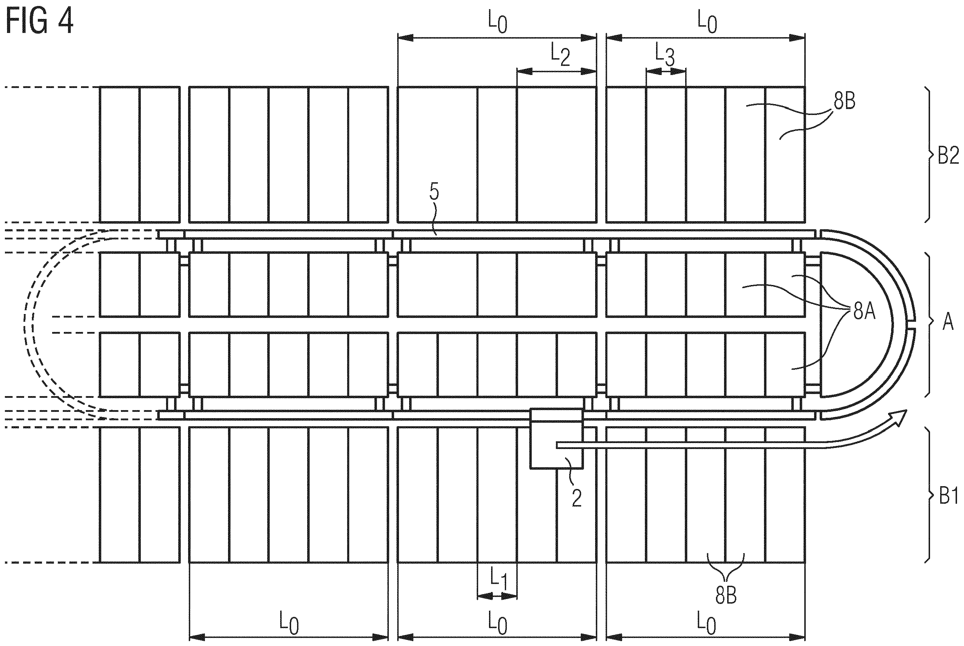

Fig. 4 zeigt das modulartiges Montageablaufsystem in Draufsicht, wobei denkbar ist, dass dieses wie gezeigt als Umlaufsystem mit Kreisverkehr ausgeführt ist. Gleichsam ist aber denkbar, dass dieses als lineares System mit Anfangs-(A) und Endpunkt (E) ausgeführt ist.

Hierbei sind immer vorzugsweise Einheiten zur Bereitstellung von Werkstücken vorzugsweise auf einer Montageplatte (8A) Bestandteil von Manipulationseinheiten (6) eines Montagemoduls (B), welche von einem Manipulator-Teilelement (3) vom Montagemodul (B) entnommen werden. Die zugehörigen Montageplatten (8A,8B) sind hierbei immer eine Teillänge (Lx) der Montagemodule (A, B) mit ihrer Länge (Lo) breit, wobei diese je nach Zuordnung vorzugsweise immer je Station gleiche Breite aufweisen. Die Masse L der Breiten sind vorzugsweise 20 mm, 30 mm oder 40 mm, bei einem Gesamtmaß Lo als Breite der Module von 60 cm, 80 cm oder 100 cm.

Durch diese Zuordnung von Einheiten gleicher Breite auf beiden Seiten des Fördersystems ergibt sich ein Vorteil hinsichtlich Austausch, Umrüstung auf andere Werkstücke und bei Wartung. Insbesondere bei einer Verlagerung der Anlage oder bei einer Wiederverwendung von Komponenten hat die Vereinheitlichung mit den Montagebasisplatten (8) auf dem vorgegebenen Raster von vorzugsweise 40 mm der Montagebohrungen erhebliche Vorteile.

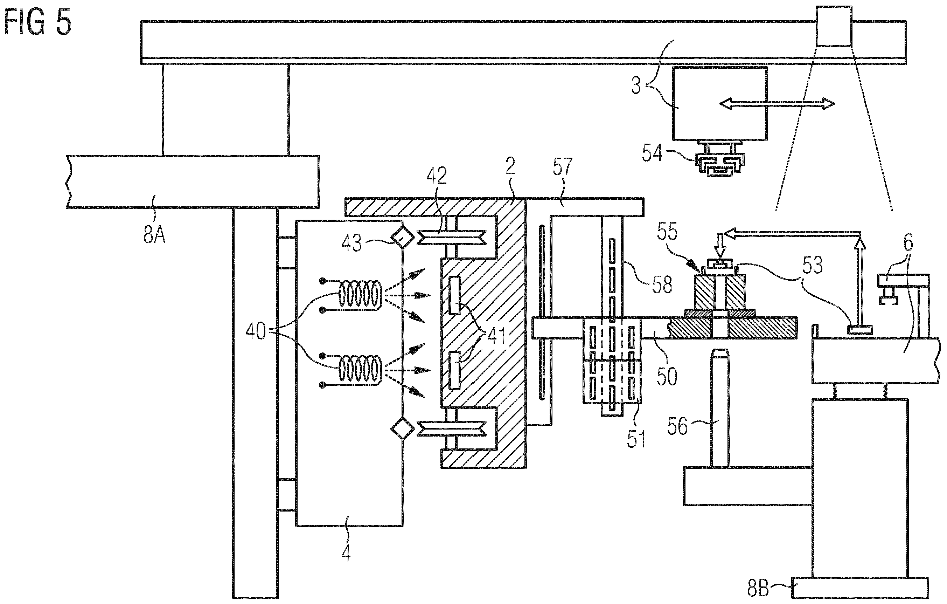

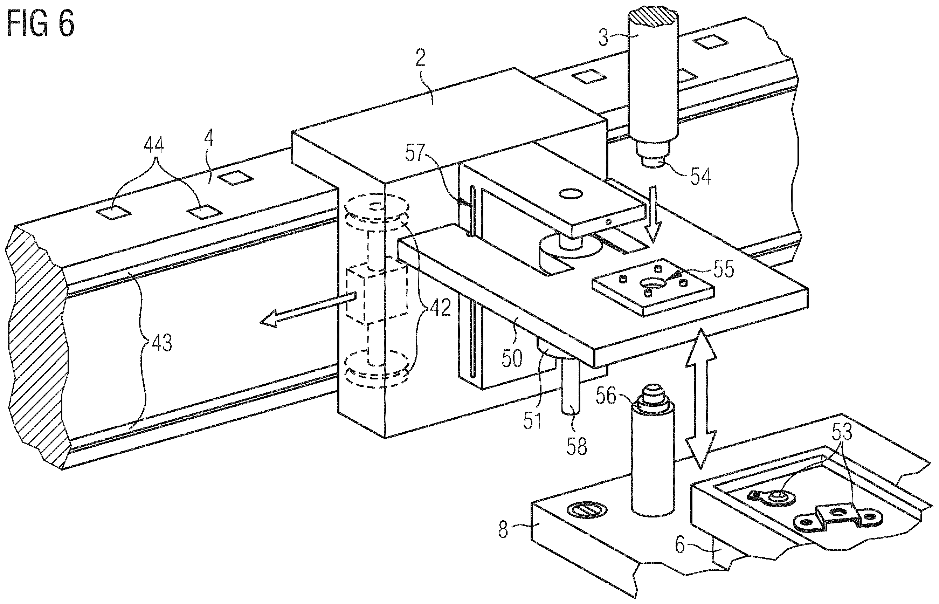

Fig. 5 und 6 zeigen das Fördersystem (5) bzw. ein Förderelement (4) im Schnitt, welches vorzugsweise als ein Magnetträgersystem ausgeführt ist. Dieses besteht aus mehreren Steuerspulen (40), einem oder mehreren Werkstückträgern (2), die mit einem oder mehreren Dauermagneten (41) an das Magnetträgersystem angekoppelt sind.

Die Werkstückträger (2) tragen eine auslesbare Identifikation in Form eines QR Codes oder RFID Chips, und ein zentraler Steuerrechner ermittelt die Position des Werkstückträgers (2) beispielsweise über Hallsensoren (44), und korrigiert und verändert die Position des Werkstückträgers (2) über Ansteuerung der Spulen (40). Die Magnete (41) bilden in Zusammenwirkung mit den Spulen (40) auch die Haltekraft für die Führung gegen seitliches Abfallen.

Die Werkstückträger (2) werden mittels Ansteuerung über einen Zentralrechner durch das modulartige Montageablaufsystem (1) hindurchführt. Über die Ansteuerung wird jeweils immer einem Werkstückträger ein jeweiliges Bauteil zugeordnet. Montageparameter während der Montage können hierbei je Station an eine Datenbank übermittelt werden, und bauteilbezogen gespeichert und ausgewertet werden. Gleichwohl können aus den Parametern auch Korrekturwerte ermittelt werden, um weitere Bauteile präzise zu fertigen, bei denen z.B. ein Nachgeben von Führungen, Verschleiß so kompensiert wird.

Die Werkstückträger (2) sind insbesondere erfindungsgemäß mit gefederten Trägerplatten (50) ausgerüstet, wobei die Federung durch eine Spiralfeder, Tellerfeder oder magnetgestützte Federeinheit (51) realisiert ist. Bauteile, Werkstücke (53) können so beispielsweise mittels einem Greifer (54) als Teil eines Manipulators (3) aufgenommen werden und auf der Platte an einer Trägerposition (55) abgesetzt werden.

Im Weiteren fährt der Manipulator (3) nach unten und verpresst dann beispielsweise das Bauteil auf einem Dorn (56) als Teil der Station auf der Montageplatte (8), welche mittels einer Führungsschiene (57) und einem Dorn (58) an einem Führungselement (99) geführt ist.

Die gefederte Trägerplatte bestehend aus Magnetspule (51) und Kernführung, Dorn (58) mit integrierten Magneten ermöglicht hierbei das genaue Erfassen des Bauteils und Mitfahren während des vertikalen Verpressungsvorgangs. Eine Auswertung der Verpressungskraft ist dann leicht nachvollziehbar, wenn die Federkraft des Federelements (51) auf dem Dorn (58) immer konstant über den Weg ist, und also insbesondere als Magnetfeder ausgebildet ist. Hierzu ist das Federelement (51) sowie der Dorn (58) mit Permanentmagneten (71 und 72) ausgerüstet, wobei der Dorn (58) im Federelement mittels Gleitlager geführt ist.

Insbesondere ist vorzugsweise der Dorn (58) am Werkstückträger (2) befestigt, wobei das Federelement (51) an der gefederten Platte (50) befestigt ist, mit dieser verfährt.

Insbesondere werden am Manipulator (3) bei Montage / Verarbeitung des Werkstücks / Bauteils alle Steuerströme mitgeschrieben, abgespeichert und ausgewertet. Hiernach werden insbesondere automatisch Korrekturwerte ermittelt, welche in die zukünftige Positionierung von Werkstück/ Bauteil und aber auch des Werkstückträgers in Verfahrrichtung des Transportsystems für eine Montagestation einfliessen und hierfür vorgehalten, als Setting abgespeichert werden.

Insbesondere wird durch eine vorzugsweise weich eingestellte Abfederung der gefederten Platte (50) in Verbindung mit einem Wegmesssystem aber auch das korrekte Absetzen des Werkstücks (53) auf der Trägerposition (55) detektiert.

Viele Schäden an Manipulatoren entstehen durch falsches Ablegen oder Aufnehmen. Eine Montageeinrichtung kann insbesondere durch ein falsch eingelegtes Werkstück beschädigt werden. Dies kann zur dauerhaften Schädigung der Einrichtung führen, welche hiermit so verhindert wird.

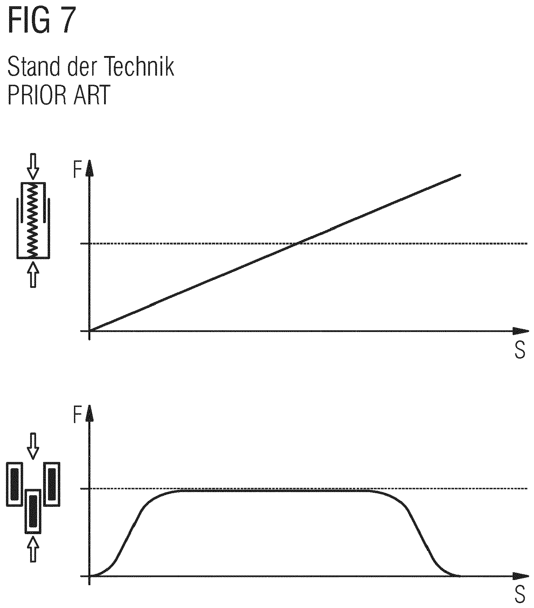

Fig. 7 zeigt einen beispielhaften Kraftverlauf einer solch verbesserten Magnetfeder im Vergleich zu einer herkömmlichen Spiralfeder. Der Kraftverlauf ist wie ersichtlich über einen weiten Bereich konstant, wobei bei anderen Federn immer die Kraft mit Einfederung zunimmt.

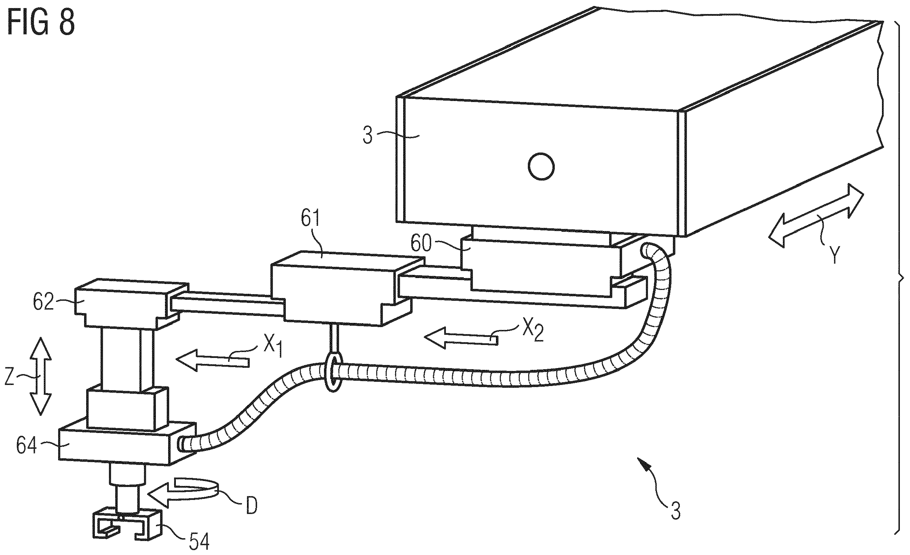

Fig. 8 zeigt eine verbesserte Montagestation. Weiterhin können die Montagemanipulatoren verbessert werden, wenn die Manipulatoren aus Manipulator-Teilelementen (60, 61, 62) bestehen, insbesondere wenn diese aus mehreren servogesteuerten Armen, Abschnitten bestehen, welche die drei Raumachsen X,Y und Z ansteuern, aber hierbei über Doppelarme mit zweifach Auszug verfügen. So kann auf kleinstem Raum ein größerer Verfahrweg realisiert werden. In X-Richtung wird wie hier gezeigt mit zwei kleinen Abschnitten eine größere Distanz verfahren.

Zu Fig. 5 bis 8: Das modulartige Manipulatorsystem zeichnet sich insbesondere auch dadurch aus, dass alle Komponenten leicht getauscht werden können und über die Schraubpositionen (100-104) leicht ausgetauscht werden können. Insbesondere aber lässt sich die Trägerplatte (50) jederzeit nach unten von dem Dorn (58) abziehen und gegen eine andere austauschen. Gleichzeitig kann der der gesamte Werkzeugträger jederzeit werkzeuglos vom Fördersystem getrennt werden, indem eine Person die Magnetkraft überwindet, und diesen vom System per Hand löst.

Die Erfindung ist nicht auf die vorhergehenden ausführlichen Ausführungsbeispiele beschränkt. Sie kann in dem Umfang der nachfolgenden Ansprüche modifiziert werden. Ebenfalls können einzelne Aspekte aus den Unteransprüchen miteinander kombiniert werden.

## Patentansprüche

1. Modulartiges Manipulatorsystem, welches im Durchlauf ein Werkstück mittels eines Werkstückträgers an verschiedenen Manipulatoren über ein Fördersystem vorbeiführt, aufweisend
einen Werkstückträger (2) als Modul zur Führung am Transportsystem,
mit einer Trägerplatte (50) als Modul zur Aufnahme für Werkstücke
**dadurch gekennzeichnet, dass**
die Trägerplatte (50) zum Werkstückträger (2) gefedert geführt ist.

2. Modulartiges Manipulatorsystem
nach Anspruch 1, wobei die Trägerplatte (50) vertikal zum Transportsystem geführt und gefedert ist.

3. Modulartiges Manipulatorsystem
nach Anspruch 1 oder 2, wobei
wobei die Trägerplatte (50) über ein Magnetfedersystem gefedert ist, bestehend aus einem Führungskern (58) und einer zylindrischen Federeinheit (51), wobei Führungskern und Federeinheit (51) axial zueinander über eine Bohrung in der Federeinheit geführt sind, und wobei beide Teile, Führungskern (58) und Federeinheit (51) mit Permanentmagneten bestückt sind.

4. Modulartiges Manipulatorsystem
nach einem der Ansprüche 1 bis 3, wobei
der Werkstückträger (2) von einer Magnetfeder vertikal gefedert ist, welche über einen weiten Bereich des Verfahrwegs eine konstante Kraft hat.

5. Modulartiges Manipulatorsystem
nach einem der Ansprüche 1 bis 3, wobei
der Werkstückträger (2) von einer Magnetfeder vertikal gefedert ist, welche eine Selbsthaltekraft besitzt, welche die Federplatte (50) gegen die Schwerkraft nach oben drückt,
und/oder wobei der die Trägerplatte (50) mit angekoppelter Federeinheit (51) vom an dem Werkstückträger angekoppelten Dorn jederzeit werkzeuglos abziehbar und austauschbar ist.

6. Modulartiges Manipulatorsystem
nach einem der Ansprüche 1 bis 5, wobei
der Werkstückträger (2) zum Transportsystem über 3 oder 4 an dem Werkstückträger angebrachte Rollen auf Schienen geführt ist.

7. Modulartiges Manipulatorsystem
nach einem der vorherigen Ansprüche, wobei der Werkstückträger (2) zum Transportsystem (5) waagrecht geführt wird auf zwei übereinander angeordneten Schienen (43), und wobei ein Permanentmagnet (41) innerhalb des Werkstückträgers selbigen am Transportsystem über Magnetkraft hält.

8. Modulartiges Manipulatorsystem
nach einem der vorherigen Ansprüche, wobei der Werkstückträger (2) über Spulen (40) im Transportsystem (5) angetrieben wird.

9. Modulartiges Manipulatorsystem, welches im Durchlauf ein Werkstück mittels eines Werkstückträgers (2) an verschiedenen Manipulatoren (3,6) vorbeiführt,
aufweisend
ein zentrales, modulartiges Inselmodul (A)
wobei dies ein Förderelement (4, 5) enthält, welches Werkstücke mittels des Werkstückträgers (2) fördert und enthaltend mehrere Manipulator-Teilelemente (3),
sowie aufweisend
zwei oder mehrere Montagemodule (B), welche an das zentrale modulartiges Inselmodul (A) und somit an das Förderelement (5) angekoppelt sind
**dadurch gekennzeichnet, dass**
die Montagemodule (B) mehrere Manipulationseinheiten (6) auf Montageplatten (8B) in einer Reihe aufnehmen, wobei immer einer Manipulationseinheit (6) eine Steuereinheit (7) zugeordnet ist,
und wobei Manipulationseinheiten (6) gegenüber den Manipulator-Teilelementen (3) des Inselmoduls (A) angeordnet sind,
und wobei das Förderelement (5, 4) den Werkstückträger (2) zwischen den Manipulationseinheiten (6) der Montagemodule (B) und den Manipulator-Teilelementen (3) des Inselmoduls (A) hindurchführt.

10. Modulartiges Manipulatorsystem
nach einem der Ansprüche 1 bis 9, wobei das Förderelement (4, 5) ein Magnetträgersystem aufweist, welches aus mehreren Steuerspulen besteht, und einem oder mehreren Werkstückträgern, die mit zumindest einem Dauermagneten an das Magnetträgersystem angekoppelt sind,
und wobei die Werkstückträger eine auslesbare Identifikation tragen oder mittels Hall-Sensoren und einem am Werkstückträger untergebrachten Magneten geortet werden, und wobei ein zentraler Steuerrechner die Position des Werkstückträgers über Ansteuerung der Spulen steuert.

11. Modulartiges Manipulatorsystem
nach einem der vorherigen Ansprüche, wobei das Magnetträgersystem (4, 5) die Werkstückträger (2) durch das modulartige Montageablaufsystem (1) hindurchführt und - wobei die Werkstückträger (2) gefederte Trägerplatten für die Werkstücke aufweisen, wobei die Federung durch eine Spiralfeder, Tellerfeder oder magnetgestützte Feder realisiert ist.

12. Modulartiges Manipulatorsystem
nach einem der vorherigen Ansprüche, wobei die Trägerplatten (50) der Werkstückträger (2) mit Manipulator-Teilelementen (3) oder mit Manipulationseinheiten (6) bestückt oder vertikal bewegt werden, welche drei Raumachsen ansteuern und/ oder über Doppelarme mit zweifach Auszug verfügen.

13. Modulartiges Manipulatorsystem
nach einem der vorherigen Ansprüche, wobei die Trägerplatten (50) der Werkstückträger (2) mit Manipulator-Teilelementen (3) oder mit Manipulationseinheiten (6) mit Bauteilen (53) bestückt werden, welche zuvor von einer Kamera erfasst wurden, dann zum Werkstückträger und Trägerplatte vor dem Absetzen zu diesem ausgerichtet werden.

14. Modulartiges Manipulatorsystem
nach einem der vorherigen Ansprüche, wobei an einer Montagestation die Trägerplatten (50) der Werkstückträger (2) mit einem Manipulator (3) vertikal betätigt werden, und sich hierbei Bauteile (53) an einem Dorn (56) ausrichten, und im weiteren Verfahren mit dessen Hilfe vor Ort verpresst oder verschweißt werden.

15. Modulartiges Manipulatorsystem
nach einem der vorherigen Ansprüche, wobei die Trägerplatten (50) der Werkstückträger (2) mit zumindest einem Sensor, vorzugsweise einem Weg- oder Kraftsensor, ausgerüstet sind, und einem Speicher und Kommunikationseinheit für Messwerte und Prozessdaten, wobei diese von einer Pufferbatterie gespeist wird, die vorzugsweise induktiv geladen wird, vorzugsweise durch die Spulen des Transportsystems.

16. Modulartiges Manipulatorsystem
nach einem der vorherigen Ansprüche, wobei an einer Montagestation die Trägerplatten (50) aufliegende Werkstücke, Bauteile (53) auf der Werkstückträger (2) mit zumindest einem Manipulator (3,6) betätigt oder verarbeitet oder bearbeitet werden, und hierbei aus den Ansteuerströmen des Manipulators (3, 6) Prozessdaten über die Verarbeitung und Montage gewonnen werden, wobei diese vorzugsweise für / als eine Montagekraft verarbeitet werden, und hiernachfolgende weitere Montageschritte mithilfe dieser Prozessdaten angepasst, optimiert werden.
